# EUROPÄISCHE PATENTSCHRIFT

(11) **EP 4 220 239 B1**
(45) Veröffentlichungstag und Bekanntmachung des Hinweises auf die Patenterteilung: **25.12.2024**
(21) Anmeldenummer: 22185903.6
(22) Anmeldetag: 21.01.2022
(51) Int. Cl.: G01V 8/20, G01V 8/12, G01S 7/481

(54) **OPTISCHER SENSOR**
OPTICAL SENSOR
CAPTEUR OPTIQUE

(43) Veröffentlichungstag der Anmeldung: 02.08.2023
(62) Teilanmeldung aus: 22152804.5
(73) Patentinhaber: Leuze electronic GmbH + Co. KG, 73277 Owen/Teck (DE)
(72) Erfinder: Feller, Bernhard, 86316 Friedberg (DE); Luthardt, Stephan, 82110 Germering (DE)
(74) Vertreter: Ruckh, Rainer Gerhard

(56) Entgegenhaltungen:
- EP-A1- 2 019 293
- EP-A1- 3 796 033
- DE-U1- 202007 010 493
- DE-U1- 202007 011 016
- DE-U1- 202020 100 208
- US-A1- 2021 215 804
- US-B1- 6 175 106

## Beschreibung

Die Erfindung betrifft einen optischen Sensor.

Derartige optische Sensoren werden generell zur Erfassung von Objekten in einem Überwachungsbereich eingesetzt.

In der einfachsten Ausführungsform weist der optische Sensor nur einen Lichtstrahlen emittierenden Sender und einen Lichtstrahlen empfangenden Empfänger auf. Der optische Sensor kann dabei als Lichttaster, Distanzsensor oder Reflexionslichtschranke und dergleichen ausgebildet sein, wobei bei diesen Ausführungsformen der Sender und der Empfänger in einem gemeinsamen Gehäuse integriert sind. Weiterhin kann der optische Sensor auch als Lichtschranke ausgebildet sein. In diesem Fall sind der Sender und Empfänger in separaten Gehäusen untergebracht.

Generell kann der optische Sensor auch mehrere Sender und/oder Empfänger aufweisen. Ein Beispiel für einen derartigen optischen Sensor ist ein Lichtvorhang.

Der Lichtvorhang umfasst typischerweise in einem ersten Gehäuse an einem Rand des Überwachungsbereichs eine Reihenanordnung von Lichtstrahlen emittierenden Sendern und in einem zweiten Gehäuse an dem gegenüberliegenden Rand des Überwachungsbereichs eine Reihenanordnung von Lichtstrahlen empfangenden Empfängern.

Der optische Sensor weist eine Auswerteeinheit auf, in welcher in Abhängigkeit von Empfangssignalen des oder der Empfänger ein Objektfeststellungssignal generiert wird. Dieses Objektfeststellungssignal kann insbesondere als binäres Schaltsignal ausgebildet sein, dessen Schaltzustände angeben, ob sich ein Objekt im Überwachungsbereich befindet oder nicht. Das Objektfeststellungssignal kann alternativ ein analoges Signal, beispielsweise ein Distanzwert sein.

Um eine sichere Objektdetektion zu gewährleisten, ist jedem Sender sowie jedem Empfänger eine Optikeinheit zugeordnet, die insbesondere Optikelemente, wie z. B. Linsen, aufweist. Mit diesen Optikeinheiten erfolgt eine sendeseitige Strahlformung der Lichtstrahlen und empfangsseitig eine Fokussierung der Lichtstrahlen auf den jeweiligen Empfänger.

Trotz des Einsatzes derartiger Optikeinheiten besteht ein häufiges Problem bei derartigen optischen Sensoren darin, dass die Lichtstrahlen nicht genau entlang der optischen Achse des Senders emittiert werden, sondern dass zusätzlich Nebenkeulen im Strahlprofil vorhanden sind. Weiterhin entstehen Nebenkeulen durch parasitäre Reflexionen von Teilen der Lichtstrahlen innerhalb des j eweiligen Gehäuses des optischen Sensors. Dies kann zu Beeinträchtigungen der Objektdetektionen führen, d. h. die Nachweissicherheit bei den Objektdetektionen ist reduziert.

Ein weiterer Nachteil besteht darin, dass bekannte optische Sensoren konstruktiv aufwändiger sind.

Die DE 20 2007 010 493 U1 betrifft ein Gehäuse für eine optoelektronische Sensoranordnung mit wenigstens einem Lichtsender und/oder einem Lichtempfänger, welches als im wesentlichen zylindrisches Hohlprofil mit einer Frontseite, einer Bodenseite, einer ersten Seitenwand und einer zweiten Seitenwand ausgebildet und aus genau einem ersten Element und einem zweiten Element zusammengesetzt ist. Das erste Element umfasst wenigstens die erste Seitenwand. Das zweite Element umfasst wenigstens die zweite Seitenwand.

Die DE 20 2020 100 208 U1 betrifft einen optoelektronischen Sensor mit mindestens einem Sendeelement und mindestens einem Empfangselement und mindestens einem Tubus vor dem Sendeelement, wobei der Tubus eine lichtabsorbierende Oberfläche aufweist. Die lichtabsorbierende Oberfläche ist durch ein dunkles thermoplastisches Elastomer mit einer matten Oberfläche gebildet.

In der US 6 175 106 B1 ist ein optischer Sensor beschrieben. Dieser optische Sensor ist in Form eines Lichtgitters ausgebildet. Das Lichtgitter umfasst eine optische Anordnung mit einer Vielzahl von Licht aussendenden Sendeelementen bzw. Empfangselementen, einer Vielzahl von diffraktiven/refraktiven optischen Elementen und einer transparenten Frontabdeckung, insbesondere einer Frontscheibe. Die diffraktiven/refraktiven optischen Elemente sind auf einem einheitlichen, einstückig ausgebildeten Trägerelement angeordnet. Das Trägerelement wird durch die Frontabdeckung gebildet, wobei die diffraktiven/refraktiven optischen Elemente unmittelbar in der Frontabdeckung ausgebildet, insbesondere in diese eingeprägt oder eingegossen sind. Die Sende- bzw. Empfangselemente sind auf einer einheitlichen, einstückig ausgebildeten Leiterplatte angeordnet.

Die DE 20 2007 011 016 U1 betrifft einen optischen Sensor zur Erfassung von Objekten in einem Überwachungsbereich, mit wenigstens einem Sendelichtstrahlen emittierenden Sender und wenigstens einem Empfangslichtstrahlen empfangenden Empfänger. Der Sender und/oder Empfänger ist jeweils in einem einstückig ausgebildeten Blendentubus gelagert ist, wobei erste Teile des Blendentubus eine Lichtfalle bilden und weitere Teile zur Lagerung einer Optik und/oder zur Ausbildung einer Blende vorgesehen sind.

Die US 2021/0215804 A1 betrifft einen Sensor mit einem Optikmodul, das an einem Gehäuse drehbar gelagert ist. Das Optikmodul umfasst einen Sender und Empfänger, die in einem Tubus gelagert sind.

Der Erfindung liegt die Aufgabe zugrunde, einen optischen Sensor der eingangs genannten Art bereitzustellen, bei welchem mit geringem Herstellungsaufwand die Nachweissicherheit erhöht ist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten in einem Überwachungsbereich mit wenigstens einem eine optische Achse aufweisenden Lichtstrahlen emittierenden Sender und mit wenigstens einem eine optische Achse aufweisenden Empfänger, welcher zum Empfang von Lichtstrahlen ausgebildet ist. Dem Sender und dem Empfänger ist jeweils ein Tubus zugeordnet, dessen Längsachse in Richtung der optischen Achse des Senders oder Empfängers verläuft. Der Tubus besteht aus mehreren Tubuselementen, die quer zur optischen Achse zum Tubus gefügt werden können. Der Tubus bildet wenigstens eine Elementebene, in der ein Optikelement vorhanden ist, aus. Der Tubus weist eine oder mehrere Elementebenen in Form von Blendenebenen auf, in welchen jeweils eine Blende vorhanden ist, wobei jede Blende Bestandteil der Tubuselemente ist. Die Tubuselemente des Tubus sind über ein oder mehrere flexible Gelenke verbunden.

Der erfindungsgemäße optische Sensor kann generell nur einen Sender und nur einen Empfänger aufweisen, wobei dann der optische Sensor als Lichtschranke, Reflexionslichtschranke, Lichttaster, Distanzsensor oder dergleichen ausgebildet ist. Der optische Sensor kann auch eine Mehrfachanordnung von Sendern und/oder Empfängern aufweisen. Insbesondere kann der optische Sensor als Lichtvorhang ausgebildet sein.

Die Funktionsweise des optischen Sensors ist generell derart, dass der optische Sensor eine Auswerteeinheit aufweist, in der abhängig von Empfangssignalen des oder der Empfänger ein Objektfeststellungssignal generiert, welches angibt, ob ein Objekt im Überwachungsbereich vorhanden ist.

Der optische Sensor kann generell als Sicherheitssensor ausgebildet sein. Für den Einsatz im Bereich der Sicherheitstechnik weist dieser einen fehlersicheren Aufbau auf, was beispielsweise durch eine zweikanalige Auswerteeinheit realisiert wird.

Erfindungsgemäß ist jedem Sender und jedem Empfänger ein Tubus zugeordnet, welcher aus mehreren Tubuselementen besteht. Der sendeseitige und der empfangsseitige Tubus können identisch ausgebildet sein, was jedoch nicht zwingend ist.

Ein wesentlicher Aspekt der Erfindung besteht darin, dass die Tubuselemente zur Montage des Tubus quer zur Optikeinheit gefügt, d. h. zusammengesetzt und miteinander verbunden werden. Diese Montage ist nicht nur einfach durchführbar. Vielmehr ermöglicht dies eine einfache Integration von Optikelementen in dem Tubus. Die Optikelemente sind in verschiedenen Elementebenen im Tubus integriert, wobei die Elementebenen vorteilhaft senkrecht zur optischen Achse orientiert. Die einzelnen Tubuselemente weisen Aufnahmesegmente für die Optikelemente, die in Form von Hohlräumen mit Hinterschnittstrukturen ausgebildet sein können. Die Optikelemente können in diese Aufnahmesegmente eingelegt werden, wobei nach Zusammenfügen der Tubuselemente zum Tubus sich die Aufnahmesegmente zu einer in Umfangsrichtung des Tubus umlaufenden Aufnahme ergänzen, in der das jeweilige Optikelement gelagert ist.

Ein wesentlicher Vorteil besteht weiter darin, dass damit die Anzahl und die Ausbildungen der Optikelemente im Tubus flexibel vorgegeben werden, wodurch die optischen Eigenschaften der so gebildeten Optikeinheit optimiert werden können. Dabei können ohne weiteres auch komplexe optische Sensoren realisiert werden. Insbesondere ist es damit möglich, optische Störungen infolge von Nebenkeulen der Lichtstrahlen zu eliminieren oder zumindest zu reduzieren.

Dadurch wird mit geringem konstruktivem Aufwand eine hohe Nachweissicherheit bei den mit dem optischen Sensor durchgeführten Objektdetektionen erhalten.

Gemäß einer vorteilhaften Ausführungsform sind die Tubuselemente des Tubus in Form von Kunststoff-Spritzgussteilen ausgebildet.

Das Gießen der die Tubuselemente bildenden Kunststoff-Spritzgussteile ist deshalb einfach durchführbar, da sich die Turbuselemente nur über einen Teilwinkelbereich des genannten Tubus erstrecken und dadurch keine geschlossenen Hohlkörper bilden, sondern offene Strukturen, an welchen insbesondere die Aufnahmesegmente in Form von Hohlräumen begrenzenden Hinterschnittstrukturen freiliegen. Die so ausgebildeten Tubuselemente können rationell als Kunststoff-Spritzgussteile hergestellt werden.

Besonders vorteilhaft sind die Tubuselemente überlappend zum Tubus zusammengeführt.

Dies gewährleistet eine durchgehend lichtdichte Wand des Tubus, was z. B. bei einer Stoss-an-Stoss-Verbindung der einzelnen Tubuselemente nicht sicher gewährleistet ist, da dort aufgrund von Bauteiltoleranzen schmale Schlitze zwischen den Tubuselementen verbleiben können, durch die Licht durchbrechen kann.

Um den Tubus aus dem Tubuselement zu bilden, sind vorteilhaft Fixiermittel vorgesehen, mittels derer Tubuselemente verbindbar sind.

Besonders zweckmäßig sind die Fixiermittel von Clips-Verbindungen gebildet.

Damit wird eine einfache, werkzeuglose Montage des Tubus ermöglicht. Die Fixiermittel sind vorteilhaft Bestandteil des oder der den Tubus bildenden Tubuselemente, so dass diese ohne Zusatzaufwand mit den Tubuselementen als Kunststoff-Spritzgussteil gefertigt werden können.

Weiterhin vorteilhaft weist der oder jeder Tubus Befestigungsmittel zur Befestigung an einer Unterlage auf.

Insbesondere ist die Unterlage von einer Leiterplatte gebildet, auf der Sender und/oder Empfänger angeordnet sind.

Vorteilhaft sind die Befestigungsmittel als Rast- oder Clips-Mittel ausgebildet.

Damit kann der Tubus werkzeuglos an der Unterlage befestigt werden. Zudem können die Befestigungsmittel in das oder die den Tubus bildenden Kunststoff-Spritzgussteil integriert sein, so dass kein zusätzlicher Fertigungsaufwand zur Herstellung der Befestigungsmittel entsteht.

Erfindungsgemäß weist der Tubus eine oder mehrere Elementebenen in Form von Blendenebenen auf, in welchen jeweils eine Blende vorhanden ist.

Erfindungsgemäß ist die oder jede Blende Bestandteil des Tubus.

Besteht der Tubus aus einem oder mehreren Kunststoff-Spritzgussteilen kann die Blende Bestandteil dieser Kunststoff-Spritzgussteile sein, wodurch die Blende rationell hergestellt werden kann.

Die Funktionalität des erfindungsgemäßen Tubus kann vorteilhaft dadurch noch erweitert sein, dass die Innenwand des Tubus Lichtfallen bildende Mikrostrukturen aufweist.

Dadurch werden unkontrollierte Lichtreflexionen an der Innenwand des Tubus noch besser unterbunden.

Gemäß einer besonders vorteilhaften Ausführungsform ist der optische Sensor als Lichtvorhang ausgebildet.

In diesem Fall weist der Lichtvorhang eine Reihenordnung von Sendern auf, wobei jedem Sender ein Tubus zugeordnet ist. Diese Tuben bilden eine senderseitige Tubenanordnung. Der Lichtvorhang weist eine Reihenanordnung von Empfängern auf, wobei jedem Empfänger ein Tubus zugeordnet ist. Diese Tuben bilden eine empfangsseitige Tubenanordnung.

Besonders vorteilhaft ist, dass in den Tuben der sende- und/oder empfangsseitigen Tubenanordnung jeweils eine Linsenanordnung vorhanden ist. Die Linsen der Linsenanordnung und benachbarte Linsenanordnungen für die sende- oder empfangsseitige Tubenanordnung sind über flexible Stege verbunden.

Damit kann in nur einem Fertigungsschritt die gesamte Linsenanordnung für die Tuben aller Sender bzw. Empfänger hergestellt werden.

Die Erfindung wird im Folgenden anhand der Zeichnungen erläutert. Es zeigen:
- Figur 1:: Ausführungsbeispiel des erfindungsgemäßen optischen Sensors in Form eines Lichtvorhangs.
- Figur 2:: Ausführungsbeispiel einer Optikeinheit für einen Empfänger des Lichtvorhangs gemäß Figur 1.
- Figur 3:: Ausführungsbeispiel einer Linsenanordnung für eine Reihenanordnung von Optikeinheiten gemäß Figur 2.
- Figur 4:: Weiteres Ausführungsbeispiel einer Optikeinheit für den Lichtvorhang gemäß Figur 1.
a) Schnittdarstellung
b) Draufsicht von oben
- Figur 5:: Einzeldarstellung des Tubus der Optikeinheit gemäß den Figuren 4a, 4b.

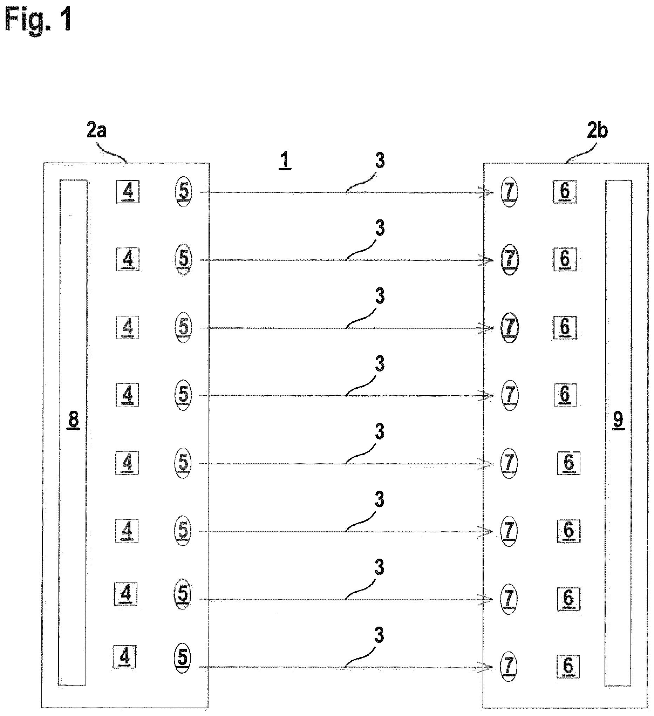

Figur 1 zeigt schematisch den Aufbau eines Ausführungsbeispiels des erfindungsgemäßen optischen Sensors in Form eines Lichtvorhangs 1 zur Erfassung von Objekten innerhalb eines Überwachungsbereichs.

Der Lichtvorhang 1 weist eine Sendereinheit mit einem Gehäuse 2a mit einer Reihenanordnung von Lichtstrahlen 3 emittierenden Sendern 4 und diesen zugeordneten Optikeinheiten 5 auf. Die Optikeinheiten 5 dienen zur Streckformung der von den Sendern 4 emittierten Lichtstrahlen 3. Die Optikeinheiten 5 sind identisch ausgebildet.

Weiterhin weist der Lichtvorhang 1 eine Empfängereinheit mit einem zweiten Gehäuse 2b mit einer Reihenanordnung von Lichtstrahlen 3 empfangenden Empfängern 6 auf, welchen jeweils eine Optikeinheit 7 vorgeordnet ist. Die Optikeinheiten 7 sind identisch ausgebildet und dienen zur Strahlformung und Fokussierung der auf die Empfänger 6 geführten Lichtstrahlen 3.

Die Gehäuse 2a, 2b sind an gegenüberliegenden Rändern des Überwachungsbereichs so angeordnet, dass jeweils ein Empfänger 6 einem Sender 4 gegenüberliegend angeordnet ist und mit diesem ein Sender-Empfänger-Paar bildet, wobei die Lichtstrahlen 3 des Senders 4 eine Strahlachse bilden. Im vorliegenden Fall sind acht Strahlachsen vorgesehen. Natürlich kann der Lichtvorhang 1 auch eine andere Zahl von Strahlachsen aufweisen.

Alternativ kann der Lichtvorhang 1 auch als Reflexions-Lichtvorhang ausgebildet sein. Dann sind alle Sender 4 und Empfänger 6 in einem Gehäuse angeordnet, welcher an einem Rand des Überwachungsbereichs angeordnet ist. Am anderen Ende befindet sich ein Reflektor. Bei freiem Überwachungsbereich werden die Lichtstrahlen 3 der Sender 4 über den Reflektor zurück zum jeweils zugeordneten Empfänger 6 geführt.

Die Sender 4 werden von einer Sendersteuerung 8 gesteuert. Den Empfängern 6 ist eine Auswerteeinheit 9 zugeordnet. Dabei werden die Strahlachsen zyklisch einzeln nacheinander aktiviert. Die Auswerteeinheit 9 steuert die Empfänger 6 an und wertet deren Empfangssignale zur Generierung eines Objektfeststellungssignals in Form eines binären Schaltsignals aus, dessen Schaltzustände angeben, ob sich ein Objekt im Überwachungsbereich befindet oder nicht. Bei freiem Überwachungsbereich gelangen die Lichtstrahlen 3 der Strahlachsen ungehindert zum Empfänger 6 der jeweiligen Strahlachse. Bei einem Objekteingriff wird wenigstens eine Strahlachse unterbrochen. Die Auswerteeinheit 9 kann einen mehrkanaligen Aufbau aufweisen, falls der Lichtvorhang 1 einen Sicherheitssensor bildet.

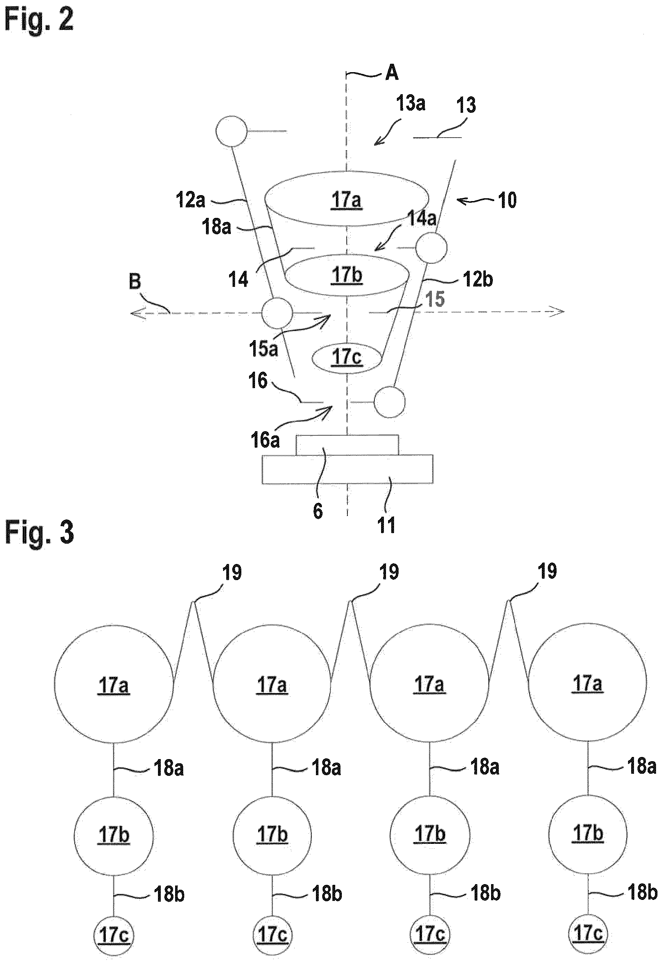

Figur 2 zeigt in stark schematisierter Form ein Ausführungsbeispiel der empfangsseitigen Optikeinheit 7. Die senderseitigen Optikeinheiten 5 weisen einen hierzu entsprechenden, d. h. identischen Aufbau auf.

Die Optikeinheit 7 weist einen konischen, lichtundurchlässigen Tubus 10 auf, dessen Längsachse entlang der optischen Achse A des Empfängers 6 verläuft.

Alle Empfänger 6 des Lichtvorhangs 1 sind auf einer Leiterplatte 11 angeordnet. Alle Tuben 10 sind mit nicht dargestellten Befestigungsmitteln an der Leiterplatte (11) befestigt. Die Befestigungsmittel sind von Rast- oder Clips-Mitteln gebildet, die einstückig mit dem Tubus 10 ausgebildet sind.

Der Tubus 10 besteht aus zwei Tubuselementen 12a, 12b, die entlang einer quer zur Optikeinheit 7 verlaufenden Formungsrichtung B aneinander fügbar sind. Die Tubuselemente 12a, 12b bestehen jeweils aus einem Kunststoff-Spritzgussteil.

Die Tubuselemente 12a, 12b erstrecken sich in Umfangsrichtung jeweils über einen Winkelbereich von etwas mehr als 180° und werden überlappend in der Formungsrichtung B aneinandergefügt, so dass sich deren Randbereiche überlappen. Die Tubuselemente 12a, 12b werden mit nicht dargestellten Fixiermitteln aneinander befestigt. Die Fixiermittel sind Bestandteile der Tubuselemente 12a, 12b und sind im vorliegenden Fall in Form von Clips-Verbindungen gebildet.

Bei dem Tubus 10 gemäß Figur 2 sind mehrere senkrecht zur optischen Achse verlaufende Elementebenen vorgesehen, in welchen Optikelemente gelagert sind.

In einer ersten Elementebene, die eine Linsenebene bildet und die am oberen Rand des Tubus 10 verläuft ist eine Blende 13 vorgesehen, deren kreisförmige Blendenöffnung 13a symmetrisch zur optischen Achse angeordnet ist. Diese Blende 13 ist Bestandteil des ersten Tubuselements 12a, wobei diese einstückig mit dem Tubuselement 12a ausgebildet ist. Alternativ kann die Blende 13 auch ein Einlegeteil sein, das in den Tubus 10 eingelegt werden kann, wobei dann an den Tubuselementen 12a, 12b entsprechende Aufnahmesegmente vorgesehen sind.

Weiterhin sind zwei Zwischenblenden 14, 15 mit jeweils einer Blendenöffnung 14a, 15a vorgesehen. Die Zwischenblende 14 ist Bestandteil des Tubuselements 12b, die Zwischenblende 15 ist Bestandteil des Tubuselements 12a.

Schließlich ist am unteren, dem Empfänger 6 zugewandten, Rand des Tubus 10 eine Feldblende 16 mit einer Blendenöffnung 16a vorgesehen. Die Feldblende 16 ist am Tubuselement 12b angeordnet.

Die Durchmesser der Blendenöffnungen 13a, 14a, 15a, 16a der einzelnen Blenden 13, 14, 15, 16 werden vom unteren Rand zum oberen Rand größer, wie aus Figur 2 ersichtlich.

Die Optikeinheit 7 gemäß Figur 2 umfasst als weitere Optikelemente drei Linsen 17a-c. Diese Linsen 17a-c sind in Linsenebenen bildenden Elementebenen im Tubus 10 gelagert. Dabei bilden die Linsen 17 a-c Einlegteile, die in den Tubus 10 eingelegt werden. Zur Lagefixierung der Linsen 17a-c sind an der Innenwand des Tubus 10 Aufnahmesegmente vorgesehen.

Die Linsen 17a-c bestehen im vorliegenden Fall aus einem Kunststoff-Spritzgussteil. Hierzu sind die Linsen 17a-c über flexible Stege 18a, 18b verbunden, die mit den Linsen 17a-c das Kunststoff-Spritzgussteil bilden.

Die flexiblen Stege 18a, 18b sind vorteilhaft in Form von Filmgelenken gebildet. Die Flexibilität der Stege 18a, 18b kann durch Materialeinschnürungen, die im Kunststoff-Spritzgussteilen vorgegeben sind, erhalten werden.

Figur 3 zeigt eine Weiterbildung der Linsenanordnung gemäß Figur 2. Figur 3 zeigt eine Mehrfachanordnung von Linsen 17a-c für Tuben 10 einer sende- oder empfangsseitigen Reihenanordnung. Für jeden Tubus 10 ist eine Linsenanordnung mit drei Linsen 17a-c entsprechend der Ausführungsform gemäß Figur 2 vorgesehen, wobei diese jeweils durch die Stege 18a, 18b verbunden sind. Die Linsenanordnungen für benachbarte Tuben 10 sind mit weiteren flexiblen Stegen 19 verbunden, die entsprechend den Stegen 18a, 18b ausgebildet sind. Auf diese Weise können die Linsenanordnungen für alle Tuben 10 aus einem Kunststoff-Spritzgussteil gebildet sein. Figur 3 zeigt eine Linsenanordnung für vier Tuben 10, wobei die Anzahl der Linsenanordnung natürlich auch an eine andere Anzahl von Tuben 10 anpassbar ist.

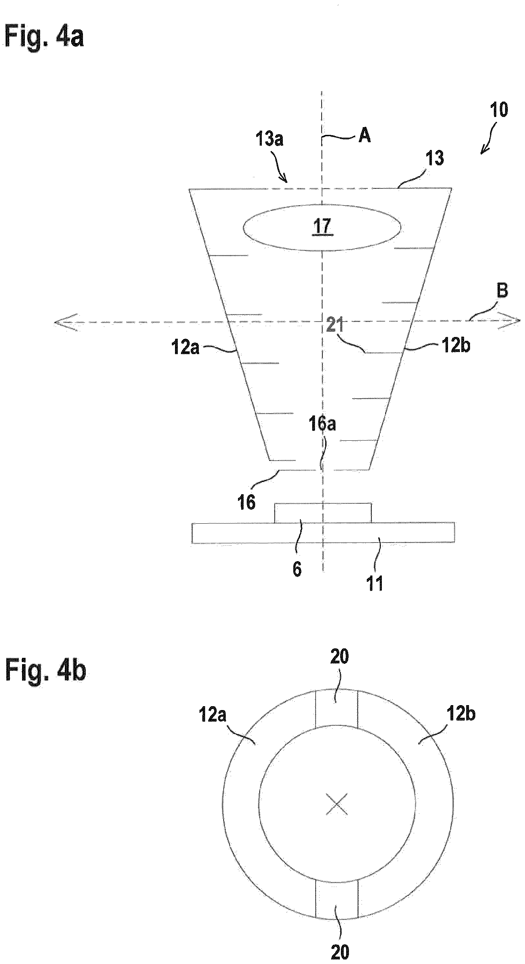

Die Figuren 4a, 4b zeigen ein weiteres Beispiel einer Optikeinheit 7. Die weist wieder einen Tubus 10 bestehend aus zwei Tubuselemente 12a, 12b auf, die in der Formungsrichtung B zusammengefügt werden können.

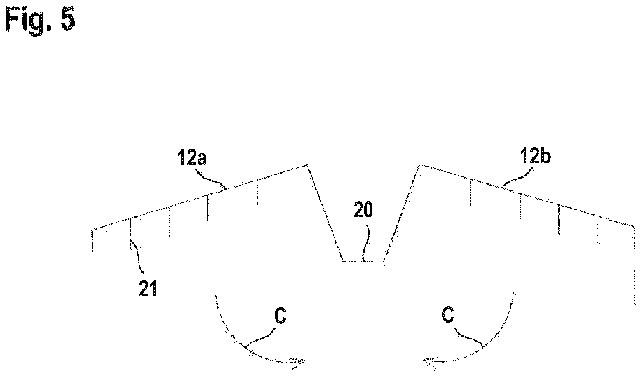

Die Ausführungsform gemäß den Figuren 4a, 4b unterscheidet sich von der Ausführungsform der Figur 2 dadurch, dass die Tubuselemente 12a, 12b durch Filmgelenke 20 verbunden sind (Figur 5). Die Tubuselemente 12a, 12b mit den Filmgelenken 20 sind von nur einem Kunststoff-Spritzgussteil gebildet. Die Filmgelenke 20 sind im Gegensatz zu den Tubuselementen 12a, 12b flexibel, d. h. biegbar, was durch geeignete Perforationen oder Materialeinschnürungen erzielt wird.

Wie Figur 5 zeigt, können die Tubuselemente 12a, 12b in den Richtungen C zusammengefaltet werden. Dazu werden die Tubuselemente 12a, 12b entsprechend der Ausführungsform gemäß Figur 2 zum Tubus 10 verbunden.

Im Bereich des oberen Randes des Tubus 10, in dem die Filmgelenke 20 angeordnet sind, befindet sich wieder die Blende 13 mit der Blendenöffnung 13a. In weiterer Übereinstimmung mit der Ausführungsform gemäß Figur 2 befindet sich am unteren Rand des Tubus 10 wieder die Feldblende 16 mit der Blendenöffnung 16a.

Die Optikeinheit 7 gemäß den Figuren 4a, 4b weist als Optikelement eine Linse 17 in einer Linsenebene auf.

In Erweiterung zur Ausführungsform gemäß Figur 2 sind drei der Ausführungsformen der Figuren 4a, 4b an den Lichtfallen bildende Mikrostrukturen 21 vorgesehen, die verhindern, dass schräg einfallendes Licht zum Empfänger 6 gelangt.

### Bezugszeichenliste

- (1): Lichtvorhang
- (2a,b): Gehäuse
- (3): Lichtstrahl
- (4): Sender
- (5): Optikeinheit
- (6): Empfänger
- (7): Optikeinheit
- (8): Sendersteuerung
- (9): Auswerteeinheit
- (10): Tubus
- (11): Leiterplatte
- (12a,b): Tubuselement
- (13): Blende
- (13a): Blendenöffnung
- (14): Zwischenblende
- (14a): Blendenöffnung
- (15): Zwischenblende
- (15a): Blendenöffnung
- (16): Feldblende
- (16a): Blendenöffnung
- (17): Linse
- (17a-c): Linse
- (18a,b): Steg
- (19): Steg
- (20): Filmgelenk
- (21): Mikrostruktur
- (A): Optische Achse
- (B): Formungsrichtung

## Patentansprüche

1. Optischer Sensor zur Erfassung von Objekten in einem Überwachungsbereich mit wenigstens einem eine optische Achse (A) aufweisenden, Lichtstrahlen emittierenden Sender (4) und mit wenigstens einem eine optische Achse (A) aufweisenden Empfänger, (6) welcher zum Empfang von Lichtstrahlen (3) ausgebildet ist, wobei dem Sender (4) und dem Empfänger (6) jeweils ein Tubus (10) zugeordnet ist, dessen Längsachse in Richtung der optischen Achse des Senders (4) oder Empfängers (6) verläuft, wobei der Tubus (10) aus mehreren Tubuselementen (12a, 12b) besteht, die quer zur optischen Achse zum Tubus (10) gefügt werden können, und wobei der Tubus (10) wenigstens eine Elementebene, in der ein Optikelement vorhanden ist, ausbildet, wobei der Tubus (10) eine oder mehrere Elementebenen in Form von Blendenebenen (14, 15) aufweist, in welchen jeweils eine Blende (13) vorhanden ist und wobei die oder jede Blende (13) Bestandteil der Tubuselemente (12a, 12b) ist, **dadurch gekennzeichnet, dass** die Tubuselemente (12a, 12b) des Tubus 10 über ein oder mehrere flexible Gelenke verbunden sind.

2. Optischer Sensor nach Anspruch 1, **dadurch gekennzeichnet, dass** die Tubuselemente (12a, 12b) des Tubus (10) in Form von Kunststoff-Spritzgussteilen ausgebildet sind.

3. Optischer Sensor nach einem der Ansprüche 1 oder 2, **dadurch gekennzeichnet, dass** Fixiermittel vorgesehen sind, mittels derer die Tubuselemente (12a, 12b) verbindbar sind.

4. Optischer Sensor nach einem der Ansprüche 1 bis 3, **dadurch gekennzeichnet, dass** der oder jeder Tubus (10) Befestigungsmittel zur Befestigung an einer Unterlage aufweist.

5. Optischer Sensor nach Anspruch 4, **dadurch gekennzeichnet, dass** die Befestigungsmittel als Rast- oder Clips-Mittel ausgebildet sind.

6. Optischer Sensor nach einem der Ansprüche 4 oder 5, **dadurch gekennzeichnet, dass** die Unterlage von einer Leiterplatte (11) gebildet ist, auf der Sender (4) und/oder Empfänger (6) angeordnet sind.

7. Optischer Sensor nach einem der Ansprüche 1 bis 6, **dadurch gekennzeichnet, dass** jede Blende (13, 16) eine Blendenöffnung zumindest teilweise umschließt.

8. Optischer Sensor nach einem der Ansprüche 1 bis 7, **dadurch gekennzeichnet, dass** Blenden (13, 16) in Form von Zwischenblenden (14, 15) vorhanden sind.

9. Optischer Sensor nach Anspruch 8, **dadurch gekennzeichnet, dass** Blenden (13, 16) oder Zwischenblenden (14, 15) höhenversetzt sind.

10. Optischer Sensor nach Anspruch 9, **dadurch gekennzeichnet, dass** höhenversetzte Blenden (13, 16) oder Zwischenblenden (14, 15) überlappen.

11. Optischer Sensor nach einem der Ansprüche 1 bis 10, **dadurch gekennzeichnet, dass** die Innenwand des Tubus (10) Lichtfallen bildende Mikrostrukturen (21) aufweist.

12. Optischer Sensor nach einem der Ansprüche 1 bis 11, **dadurch gekennzeichnet, dass** dieser ein Lichtvorhang (1) ist.

13. Optischer Sensor nach Anspruch 12, **dadurch gekennzeichnet, dass** der Lichtvorhang (1) eine Reihenordnung von Sendern (4) aufweist, wobei jedem Sender (4) ein Tubus (10) zugeordnet ist, wobei diese Tuben (10) eine senderseitige Tubenanordnung bilden, und dass der Lichtvorhang (1) eine Reihenanordnung von Empfängern (6) aufweist, wobei jedem Empfänger (6) ein Tubus (10) zugeordnet ist, wobei diese Tuben (10) eine empfangsseitige Tubenanordnung bilden.

14. Optischer Sensor nach einem der Ansprüche 1 bis 13, **dadurch gekennzeichnet, dass** dieser ein Sicherheitssensor ist.

## Claims

1. An optical sensor for detecting objects in a monitoring area with at least one transmitter (4) having an optical axis (A) and emitting light beams and with at least one receiver (6) having an optical axis (A), which is designed to receive light beams (3), the transmitter (4) and the receiver (6) each being assigned a tube (10) whose longitudinal axis runs in the direction of the optical axis of the transmitter (4) or receiver (6), the tube (10) consisting of a plurality of tube elements (12a, 12b) which can be joined to the tube (10) transversely to the optical axis, and wherein the tube (10) forms at least one element plane in which an optical element is present, wherein the tube (10) has one or more element planes in the form of aperture planes (14, 15), in each of which an aperture (13) is present and wherein the or each aperture (13) is a component of the tube elements (12a, 12b), **characterised in that** the tube elements (12a, 12b) of the tube 10 are connected via one or more flexible joints.

2. An optical sensor according to claim 1, **characterised in that** the tube elements (12a, 12b) of the tube (10) are in the form of injection-moulded plastic parts.

3. An optical sensor according to one of claims 1 or 2, **characterised in that** fixing means are provided by means of which the tube elements (12a, 12b) can be connected.

4. An optical sensor according to any one of claims 1 to 3, **characterised in that** the or each tube (10) has fastening means for fastening to a support.

5. An optical sensor according to claim 4, **characterised in that** the fastening means are designed as latching or clip means.

6. An optical sensor according to one of claims 4 or 5, **characterised in that** the base is formed by a printed circuit board (11) on which transmitter (4) and/or receiver (6) are arranged.

7. An optical sensor according to one of claims 1 to 6, **characterised in that** each aperture (13, 16) at least partially encloses an aperture opening.

8. An optical sensor according to one of claims 1 to 7, **characterised in that** diaphragms (13, 16) in the form of intermediate apertures (14, 15) are present.

9. An optical sensor according to claim 8, **characterised in that** apertures (13, 16) or intermediate apertures (14, 15) are offset in height.

10. An optical sensor according to claim 9, **characterised in that** vertically offset apertures (13, 16) or intermediate apertures (14, 15) overlap.

11. An optical sensor according to one of claims 1 to 10, **characterised in that** the inner wall of the tube (10) has microstructures (21) forming light traps.

12. An optical sensor according to one of claims 1 to 11, **characterised in that** this is a light curtain (1).

13. An optical sensor according to claim 12, **characterised in that** the light curtain (1) has a series arrangement of transmitters (4), each transmitter (4) being assigned a tube (10), these tubes (10) forming a tube arrangement on the transmitter side, and **in that** the light curtain (1) has a series arrangement of receivers (6), each receiver (6) being assigned a tube (10), these tubes (10) forming a tube arrangement on the receiver side.

14. An optical sensor according to one of claims 1 to 13, **characterised in that** it is a safety sensor.

## Revendications

1. Capteur optique pour la détection d'objets dans une zone de surveillance avec au moins un émetteur (4) ayant un axe optique (A) et émettant des faisceaux lumineux et avec au moins un récepteur ayant un axe optique (A), (6) qui est conçu pour recevoir des faisceaux lumineux (3), l'émetteur (4) et le récepteur (6) étant chacun équipé d'un tube (10) dont l'axe longitudinal va dans la direction de l'axe optique de l'émetteur (4) ou du récepteur (6), le tube (10) étant constitué d'une pluralité d'éléments de tube (12a, 12b) qui peuvent être joints au tube (10) transversalement à l'axe optique, et dans lequel le tube (10) forme au moins un plan d'élément dans lequel un élément optique est présent, dans lequel le tube (10) a un ou plusieurs plans d'élément sous la forme de plans d'ouverture (14, 15), dans chacun desquels une ouverture (13) est présente et dans lequel la ou chaque ouverture (13) est un composant des éléments de tube (12a, 12b), **caractérisé par le fait que** les éléments de tube (12a, 12b) du tube 10 sont reliés par une ou plusieurs articulations flexibles.

2. Capteur optique selon la revendication 1, **caractérisé par le fait que** les éléments tubulaires (12a, 12b) du tube (10) se présentent sous la forme de pièces en plastique moulées par injection.

3. Capteur optique selon l'une des revendications 1 ou 2, **caractérisé par** la présence de moyens de fixation permettant de relier les éléments tubulaires (12a, 12b).

4. Capteur optique selon l'une des revendications 1 à 3, **caractérisé par le fait que** le ou chaque tube (10) comporte des moyens de fixation à un support.

5. Capteur optique selon la revendication 4, **caractérisé par le fait que** les moyens de fixation sont conçus comme des moyens de verrouillage ou de clipsage.

6. Capteur optique selon l'une des revendications 4 ou 5, **caractérisé par le fait que** la base est formée par une carte de circuit imprimé (11) sur laquelle sont disposés l'émetteur (4) et/ou le récepteur (6).

7. Capteur optique selon l'une des revendications 1 à 6, **caractérisé par le fait que** chaque ouverture (13, 16) entoure au moins partiellement une ouverture.

8. Capteur optique selon l'une des revendications 1 à 7, **caractérisé par** la présence de membranes (13, 16) sous forme de membranes intermédiaires (14, 15).

9. Capteur optique selon la revendication 8, **caractérisé par le fait que** les ouvertures (13, 16) ou les ouvertures intermédiaires (14, 15) sont décalées en hauteur.

10. Capteur optique selon la revendication 9, **caractérisé par** le chevauchement des ouvertures décalées verticalement (13, 16) ou des ouvertures intermédiaires (14, 15).

11. Capteur optique selon l'une des revendications 1 à 10, **caractérisé par le fait que** la paroi intérieure du tube (10) comporte des microstructures (21) formant des pièges à lumière.

12. Capteur optique selon l'une des revendications 1 à 11, **caractérisé par le fait qu'**il s'agit d'un rideau de lumière (1).

13. Capteur optique selon la revendication 12, **caractérisé par le fait que** le rideau lumineux (1) comporte une série d'émetteurs (4), chaque émetteur (4) étant associé à un tube (10), ces tubes (10) formant un ensemble de tubes du côté de l'émetteur, et **par le fait que** le rideau lumineux (1) comporte une série de récepteurs (6), chaque récepteur (6) étant associé à un tube (10), ces tubes (10) formant un ensemble de tubes du côté du récepteur.

14. Capteur optique selon l'une des revendications 1 à 13, **caractérisé par le fait qu'**il s'agit d'un capteur de sécurité.
